# EUROPÄISCHE PATENTSCHRIFT

(11) **EP 1 632 790 B1**
(45) Veröffentlichungstag und Bekanntmachung des Hinweises auf die Patenterteilung: **25.04.2012**
(21) Anmeldenummer: 04104299.5
(22) Anmeldetag: 07.09.2004
(51) Int. Cl.: G01S 7/481, G01S 17/42, G01S 17/89, G01S 17/10

(54) **Optischer Entfernungsmesser und Verfahren zur Bestimmung der Entfernung zwischen einem Objekt und einem Referenzpunkt**
Optical range finder and method for determining the range between an object and a reference point
Télémètre et procédé pour déterminer la distance entre an objet et un point de référence

(30) Priorität: 15.09.2003 US 662865
(43) Veröffentlichungstag der Anmeldung: 08.03.2006
(73) Patentinhaber: DEERE & COMPANY, Moline, Illinois 61265-8098 (US)
(72) Erfinder: Anderson, Noel Wayne, Fargo, ND 58102 (US)
(74) Vertreter: Holst, Sönke

(56) Entgegenhaltungen:
- EP-A- 0 887 660
- EP-A- 1 221 582
- EP-A- 1 321 777
- RUFFIN P B: "Optical MEMS-based arrays" PROCEEDINGS OF THE SPIE, SPIE, BELLINGHAM, VA, US, Bd. 5055, Juli 2003 (2003-07), Seiten 230-241, XP002310629 ISSN: 0277-786X
- FAINMAN Y ET AL: "3D quantitative imaging of the microvasculature with the Texas Instruments digital micromirror device" PROCEEDINGS OF THE SPIE, SPIE, BELLINGHAM, VA, US, Bd. 4457, August 2001 (2001-08), Seiten 137-144, XP002310630 ISSN: 0277-786X
- ANAGNOSTOPOULOS G P ET AL: "The electronics of a control system for micromirrors in a laser-scanning device" ELECTRONICS, CIRCUITS AND SYSTEMS, 2002. 9TH INTERNATIONAL CONFERENCE ON SEP. 15-18, 2002, PISCATAWAY, NJ, USA,IEEE, Bd. 3, 15. September 2002 (2002-09-15), Seiten 1207-1210, XP010614572 ISBN: 0-7803-7596-3

## Beschreibung

Die Erfindung betrifft einen optischen Entfernungsmesser und ein Verfahren zur Bestimmung der Entfernung zwischen einem Objekt und einem Referenzpunkt nach den Oberbegriffen der Ansprüche 1 und 8.

Ein Entfernungsmesser ist ein Instrument oder Gerät, das zur Bestimmung der Entfernung eines Objekts von einem Bezugspunkt verwendet wird. Im Stand der Technik verwendet ein Laser-Entfernungsmesser einen rotierenden Spiegelzusammenbau, um die Richtung eines vom Laser-Entfernungsmesser abgesandten Strahls vorzugeben. Wenn der Laser-Entfernungsmesser in einer landwirtschaftlichen Umgebung Staub oder anderen Feststoffpartikeln ausgesetzt ist, kann der Bewegungsbereich des Laser-Entfernungsmessers begrenzt und dadurch die Leistung vermindert werden. Vibrationen des Laser-Entfernungsmessers können zu mechanischem Versagen einer oder mehrerer Verbindungen im drehenden Spiegelzusammenbau führen. Außerdem sind die mechanischen Komponenten eines drehenden Spiegelzusammenbaus durch Fertigungsbeschränkungen und Kosten auf eine praktische Minimalgröße begrenzt. Die Größe eines rotierenden Spiegelzusammenbaus kann zu groß sein, um in einer gewünschten Gehäusegröße des Laser-Entfernungsmessers aufgenommen zu werden.

Ein bekannter Laser-Entfernungsmesser kann einen mechanisch angesteuerten Spiegel aufweisen, der einen bestimmten, erforderlichen Bewegungsbereich überstreicht, um eine gewünschte Einstellung oder Winkelposition zu erreichen. Da derartige mechanische Scanner einen bestimmten Bewegungsbereich überstreichen müssen, um eine gewünschte Bewegung des Laser- oder Lichtstrahls zu erreichen, wirkt die tatsächliche Antwortzeit des mechanischen Laserscanners begrenzend auf die Leistung. Um die Abtastrate des mechanischen Scanners zu vergrößern, kann das Licht einer Laserquelle von einem mehrseitigen drehenden Spiegel oder Prisma reflektiert werden, um einen breiteren Winkelbereich des Bildfelds der Laserquelle über eine Fläche zu erzeugen. Die rotierende Spiegelanordnung ist jedoch kostenaufwändig herzustellen und für mechanische Fehler empfindlich, wie Stöße oder Vibrationen, die Risse im Spiegel verursachen oder seine Ausrichtung verändern.

Die als gattungsbildend angesehene EP 1 221 582 A beschreibt die Verwendung eines einzigen Schwingspiegels zur gerichteten Ablenkung von Licht in einem auf einer Laufzeitmessung basierenden Entfernungsmesser.

Die EP 0 887 660 A beschreibt einen an einer selbstfahrenden Erntemaschine angebrachten Laserentfernungsmesser, der auf einer Laufzeitmessung basiert. Der Laser-Abtaststrahl wird über einen drehbaren Spiegel oder eine bewegbare Fokussiereinrichtung verschwenkt, oder die Laserentfernungsmess-Vorrichtung selbst wird zur Verschwenkung des Laser-Abtaststrahls verschwenkt.

In der EP 1 321 777 A wird ein auf einer Laufzeitmessung basierender optischer Entfernungsmesser beschrieben. Er umfasst eine Lichtquelle in Form eines Lasers, ein einziges drehbares Spiegelprisma zur kontrollierte Ablenkung des Lichts und eine Empfangsdiode, die von einem Objekt reflektiertes Licht nachweist und aus deren Signalen die Entfernung zum Objekt ermittelt wird.

In dem Artikel von Ruffin, P. B., Optical MEMS-based arrays, Proceedings of the SPIE - the international society for optical engineering SPIE-Int. Soc. Opt. Eng. USA, Bd. 5055, Juli 2003, Seiten 230-241, wird die Verwendung von optischen, mikroelektromechanischen Mikrolinsenanordnungen für zweidimensionale Abtastanordnungen in LADAR-Geräten, die als Sucher in Flugkörpern dienen, beschrieben. Die Mikrolinsenanordnungen dienen als Ersatz für bisher verwendete kardanische Aufhängungen zur Abtastung der Objekte und sammeln auch das vom Objekt reflektierte Licht ein, um es dem Detektor zur Signalverarbeitung zuzuführen. Die Entfernungsmessung beruht auf einem Phasenvergleich zwischen abgestrahlter und einlaufender Strahlung.

In Fainman, Y. et al., 3D quantitative imaging of the microvasculature with the Texas Instruments digital micromirror device, Proceedings of the SPIE - the international society for optical engineering SPIE-Int. Soc. Opt. Eng. USA, Bd. 4457, August 2001, Seiten 137-134 wird die Verwendung einer digitalen Mikrospiegelanordnung in einem Mikroskop beschrieben.

Anagnostopoulos, G. P. et al., The electronics of a control system for micromirrors in a laser-scanning device, ICECS 2002, 9th IEEE International conference on electronics, circuits and systems, Bd. 3, 15. September 2002, Seiten 1207 bis 1210 beschreiben ein auf Mikrospiegeln basierendes Endoskop.

Die der Erfindung zu Grunde liegende Aufgabe wird darin gesehen, einen Laser-Entfernungsmesser bereitzustellen, der eine oder mehrere folgender Eigenschaften aufweist: schnelle oder Echtzeitantwort, die zur dynamischen Fahrzeugkontrolle geeignet ist, ein kompaktes Gehäuse, Widerstandsfähigkeit gegenüber Staub und anderen Feststoffpartikeln, und Zuverlässigkeit trotz einwirkender Vibrationen.

Diese Aufgabe wird erfindungsgemäß durch die Lehre der Patentansprüche 1 und 8 gelöst, wobei in den weiteren Patentansprüchen Merkmale aufgeführt sind, die die Lösung in vorteilhafter Weise weiterentwickeln.

Der optische Entfernungsmesser zur Bestimmung der Entfernung zu einem Objekt umfasst eine optische Quelle elektromagnetischer Strahlung. Ein fokussierendes optisches Element fokussiert oder kollimiert die elektromagnetische Strahlung auf eine Mikrospiegelanordnung oder -reihe, die eine Reihe deformierbarer reflektierender Oberflächen und eine Strahlsteuerung umfasst, um die Mikrospiegelanordnung anzusteuern, so dass sie die Richtung des steuerbaren Strahls vorgibt. Ein Datenprozessor steuert die Mikrospiegelanordnung derart an, dass sie die fokussierte elektromagnetische Strahlung in eine definierte Richtung und in einem ersten Muster zur Abtastung eines Gesichtsfelds und einem weiteren Muster zur Abdeckung einer Probe oder einer Unterfläche des Gesichtsfelds abgibt. Ein optisches Übertragungselement fokussiert oder kollimiert den definierten Strahl auf ein Objekt. Ein optisches Empfangselement empfängt vom Objekt reflektierte elektromagnetische Strahlung. Ein Detektor weist den Empfang reflektierter elektromagnetischer Strahlung nach. Ein Timer misst die Zeit, die zwischen dem Absenden der elektromagnetischen Strahlung zum Objekt und dem Empfang der elektromagnetischen Strahlung von irgendeinem Objekt innerhalb des Sichtbereichs, das hinreichend reflektierend und von geeigneter minimaler Größe ist, um einen Rücklauf elektromagnetischer Strahlung hinreichender Stärke zu erzeugen, vergangen ist. Ein Datenprozessor rechnet die vergangene Zeit in eine Entfernung zwischen dem Objekt und einem Referenzpunkt um.

In den Zeichnungen sind zwei nachfolgend näher beschriebene Ausführungsbeispiele der Erfindung dargestellt. Es zeigt:
- Fig. 1: ein Blockdiagramm einer Ausführungsform eines optischen Entfernungsmessers zur Abschätzung oder Bestimmung einer Entfernung zwischen einem Objekt und einem Referenzpunkt,
- Fig. 2: ein Flussdiagramm eines Verfahrens zur Bestimmung einer Entfernung oder eines Entfernungsbereichs eines Objekts von einem Referenzpunkt,
- Fig. 3: ein Blockdiagramm einer anderen Ausführungsform eines optischen Entfernungsmessers zur Abschätzung oder Bestimmung einer Entfernung von einem Objekt zu einem Referenzpunkt.

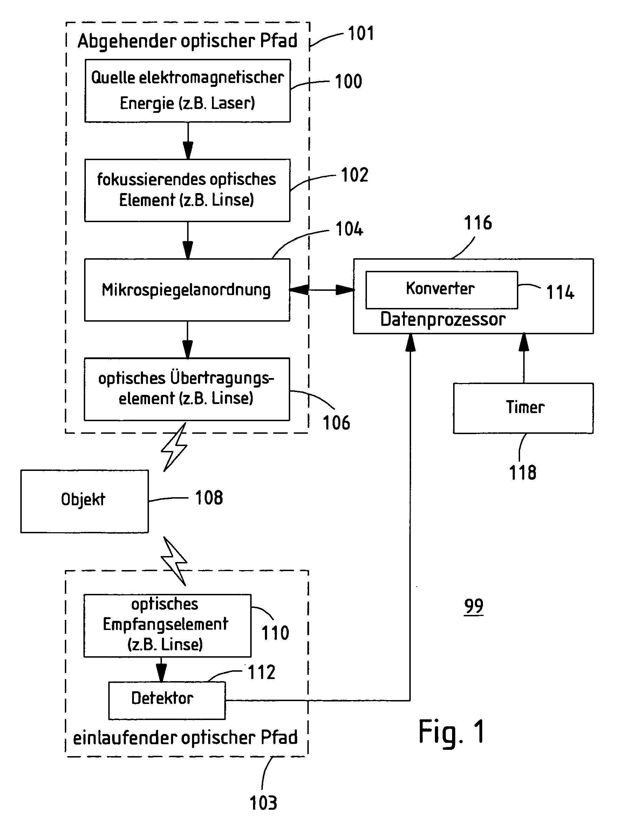

Die Figur 1 zeigt ein Blockdiagramm eines optischen Entfernungsmessers 99 zur Bestimmung der Entfernung zwischen einem Objekt 108 und einem Referenzpunkt. Der Referenzpunkt kann mit Bezug auf den Entfernungsmesser 99 oder einen Teil davon definiert sein. Der optische Entfernungsmesser 99 umfasst einen abgehenden optischen Pfad 101 und einen einlaufenden optischen Pfad 103. Der abgehende optische Pfad 101 steht mit einem elektromagnetischen Signal (z. B. einem Impuls oder einem Impulszug) in Beziehung, der vom Entfernungsmesser 99 auf ein Objekt 108 abgesandt wird, während der einlaufende optische Pfad 103 mit dem reflektierten elektromagnetischen Signal, das vom Entfernungsmesser 99 empfangen wird, in Beziehung steht. Der abgehende optische Pfad 101 umfasst eine Quelle 100 für elektromagnetische Energie, ein fokussierendes optisches Element 102, eine Mikrospiegelanordnung 104 und ein optisches Übertragungselement 106. Der einlaufende optische Pfad 103 umfasst ein optisches Empfangselement 110 und einen Detektor 112.

Der optische Entfernungsmesser 99 umfasst die Quelle 100 für elektromagnetische Energie (z. B. einen Laser), der elektromagnetische Energie (z. B. ein Infrarotstrahl, Nahinfrarot, Ultraviolett, rotes Licht, ein Strahl im sichtbaren Spektrum oder ein anderer Lichtstrahl) auf das fokussierende optische Element 102 (z. B. eine Linse) abgibt. In einer Ausführungsform weist die Quelle 100 einen Laser mit einer Ausgangsleistung auf, die nach anwendbaren US und internationalen Standards als sicher angesehen wird. Das fokussierende optische Element 102 fokussiert oder kollimiert die elektromagnetische Strahlung auf die Mikrospiegelanordnung 104. Das fokussierende optische Element 102 kann den Strahl aufweiten oder in einen parallelen Strahl formen. Ein Datenprozessor 116 steuert die Mikrospiegelanordnung 104, um die fokussierte elektromagnetische Strahlung (z. B. einen linearen Strahl) in eine definierte Richtung oder ein definiertes Strahlungsmuster zu leiten. Das optische Übertragungselement 106 fokussiert das definierte Strahlungsmuster auf das Objekt 108. Das optische Empfangselement 110 empfängt elektromagnetische Strahlung, die vom Objekt 108 reflektiert wurde. Der Detektor 112 weist den Empfang von reflektierter elektromagnetischer Strahlung nach. Der Detektor 112 erzeugt beispielsweise ein Signal, das zur Intensität der empfangenen Strahlreflexion proportional ist. Der Empfang des reflektierten Strahlungsmusters wird mit einer Empfangszeit verknüpft. Ein Timer 118 stellt die Zeit fest, die zwischen einer Absendezeit einer Absendung der elektromagnetischen Strahlung zum Objekt 108 und einer Empfangszeit des Empfangs der elektromagnetischen Strahlung vom Objekt 108 verstrichen ist. Die Zeit, die zwischen dem Verlassen des Strahls vom Entfernungsmesser 99 und seiner Rückkehr zum Entfernungsmesser 99 verstrichen ist, wird zur Bestimmung der Entfernung zwischen dem Entfernungsmesser 99 und dem Objekt 108 verwendet. Der Datenprozessor 116 konvertiert die verstrichene Zeit in eine Entfernung zwischen dem Objekt 108 und einem Referenzpunkt, z. B. dem Entfernungsmesser 99. Die Entfernung (D) zum Objekt 108 oder einem anderen Reflexionspunkt in Metern entspricht der verstrichenen Zeit in Sekunden, geteilt durch 2 und multipliziert mit der Lichtgeschwindigkeit (c) in m/s. Das bedeutet, D = Tc/2.

Die Mikrospiegelanordnung 104 umfasst Reihen reflektierender Elemente, die mit einem Substrat verbunden sind. Reflektierende Elemente können einzeln oder nacheinander mit Energie beaufschlagt werden, um eine gewünschte Fläche abzutasten (z. B. ein Sichtfeld). Jedes reflektierende Element kann über eine oder mehrere kapazitive Platten oder leitfähige Elemente beaufschlagt werden, um das reflektierende Element zu verformen und dadurch zu bewegen. Mehr als ein reflektierendes Element kann die elektromagnetische Strahlung gleichzeitig leiten, was einen größeren Strahl zur Folge hat, als wenn nur ein einzelnes reflektierendes Element den Strahl reflektiert. Die Größe des ausgegebenen Strahls, seine Intensität oder beide können daher dynamisch verstellt werden. Außerdem kann der Entfernungsmesser 99 eine glattere Abtastlinie oder eine Abtastlinie mit größerer Auflösung bereitstellen, indem einige der aktiven reflektierenden Elemente, die den Strahl führen, gewechselt werden. Verstellungen des Strahls können dynamisch durchgeführt werden, ohne Einschränkung durch die Drehgeschwindigkeit eines mehrseitigen mechanischen Spiegels der bekannten Systeme.

Bei einer Ausführungsform werden Elastomere zwischen dem reflektierenden Element und dem Substrat der Mikrospiegelanordnung 104 eingefügt, um die Antwortzeit zwischen einer Verformung und der Ruheposition zu verkürzen, nachdem das Element nicht mehr mit Energie beaufschlagt wird. Das mit dem reflektierenden Element verbundene Elastomer kann verwendet werden, um den Bewegungsbereich der reflektierenden Elemente zu vergrößern, was wiederum den Abtastwinkelbereich vergrößert. Das mit dem reflektierenden Element verbundene Elastomer kann die Energie oder Spannung verringern, die zur Steuerung der Mikrospiegelanordnung 104 benötigt wird. Mikrospiegelanordnungen 104 können durch Halbleiter- und integrierte Schaltkreisherstellungsverfahren hergestellt werden. Einzelheiten von Mikrospiegelanordnungen 104 können aus einem oder mehreren der Folgenden hergestellt sein: Silizium, Siliziumoxid, Siliziumnitrid, Aluminium, Silber und Nickel.

Eine Mikrospiegelanordnung 104 kann beispielsweise ein mikroelektromechanisches System, ein nachgiebiges mikroelektromechanisches System oder ein anderes Gerät umfassen. Die Neigung oder Bewegung der Spiegel wird durch elektrostatische Ladungen gesteuert, die an Elektroden angelegt werden. Halbleiterschalter, wie komplementäre Metalloxidsiliziumtransistoren (CMOS), können verwendet werden, um die Position der reflektierenden Elemente durch elektrostatische Ablenkung zu steuern und die Position der reflektierenden Elemente durch kapazitives Abfühlen zu erfassen.

Die Mikrospiegelanordnung 104 erlaubt einem Benutzer, verschiedene Elemente frei zugänglich zu aktivieren, nicht nur ein Abtasten in einer festgelegten Reihenfolge, wie es bei mechanischen Laserscannern erforderlich sein kann. Die Mikrospiegelanordnung 104 kann Daten über eine interessierende Region oder Fläche hinsichtlich der Koordinaten, Intensität und Entfernung bereitstellen.

Die Mikrospiegelanordnung 104 kann beispielsweise derart angesteuert werden, dass sie eine lineare Anordnung von Bildelementen oder anderen Mustern strukturierten Lichts projiziert. Die Mikrospiegelanordnung 104 kann angesteuert werden, Licht- oder Strahlungsimpulse abzugeben, wobei die Flugzeit von einem reflektierenden Hindernis gemessen wird. Die Mikrospiegelanordnung 104 umfasst ein mikroelektromechanisches Gerät, das die Ausgabe einer frei zugänglichen Strahlposition und einer variablen Strahlgröße unterstützt. Die Mikrospiegelanordnung 104 erlaubt große Flexibilität bei der Datensammlung mit einem Potential, die Effizienz der Datenaufnahme wesentlich zu verbessern. Beispielsweise kann ein großer Strahl mit einer kleinen Anzahl an Datenpunkten verwendet werden, um festzustellen, wo Objekte 108 potentiellen Interesses liegen. Ein kleiner Strahl mit hoher Abtastauflösung kann dann verwendet werden, um gerade in den interessierenden Regionen Daten hoher Dichte zu sammeln. Es sind beträchtliche Verbesserungen der Effizienz der Datenaufnahme möglich, indem der großen, groben Abtastung eine kleine Abtastung mit hoher Auflösung folgt, anstatt eine Abtastung der gesamten Szene mit hoher Auflösung durchzuführen und dann die Daten zur Extrahierung von Informationen über die interessierenden Flächen zu extrahieren.

Bei der gemultiplexten Mikrospiegelanordnung 104 kann ein Abtastmuster oder Ansteuerungsmuster festgelegt werden. Eine Aktivierung jedes nachfolgenden Elements der Mikrospiegelanordnung 104 noch bevor das Element aktuell benötigt wird, kann sinnvoll oder erforderlich sein, um die mit der Aktivierung und der Bewegung des Elements der Mikrospiegelanordnung 104 verbundene Verzögerung zu vermindern. Der zeitliche Versatz zwischen der Energiebeaufschlagung und der Aktivierung der nachfolgenden Elemente ist somit minimiert. Die Mikrospiegelanordnung 104 stellt einen frei zugänglichen Zugang zur Spiegelpositionierung bereit, um fest strukturiertes Licht zu produzieren. Die Mikrospiegelanordnung 104 unterstützt den Nachweis von Lücken (von verkrüppeltem Pflanzenwachstum oder zuvor geernteten Flächen) in einer Erntegutkante.

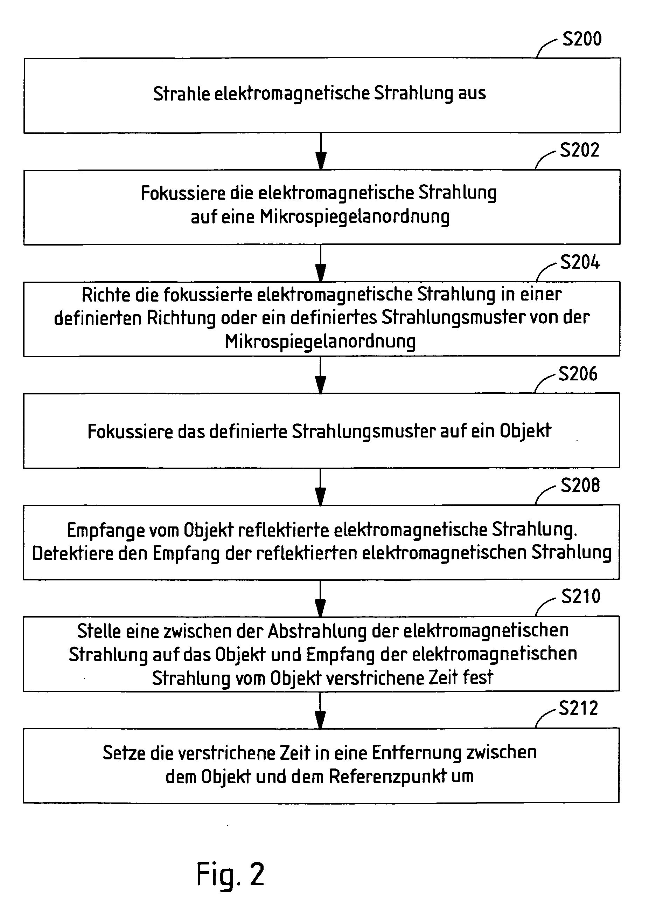

Die Figur 2 ist ein Flussdiagramm eines Verfahrens zur Feststellung einer Entfernung eines Objekts 108 von einem Bezugspunkt. Das Verfahren in Figur 2 beginnt mit dem Schritt S200.

Im Schritt 200 strahlt eine Quelle 100 für elektromagnetische Energie elektromagnetische Strahlung (z. B. einen Lichtstrahl).

Im Schritt S202 fokussiert ein fokussierendes optisches Element 102 die elektromagnetische Strahlung auf eine Mikrospiegelanordnung 104. In einem Beispiel kann eine Linse als fokussierendes optisches Element 102 die elektromagnetische Strahlung auf die Mikrospiegelanordnung 104 fokussieren. Bei einem anderen Beispiel fokussiert ein Beugungsgitter als fokussierendes optisches Element 102 die elektromagnetische Energie auf die Mikrospiegelanordnung 104.

Im Schritt S204 leitet die Mikrospiegelanordnung 104 die fokussierte elektromagnetische Strahlung in einer definierten Richtung oder einem definierten Strahlungsmuster auf ein Objekt 108 zu (z. B. eine Pflanze, ein Hindernis, Erntegut, Erntegutkante oder Stoppeln).

Im Schritt S206 fokussiert das optische Übertragungselement 106 das definierte Strahlungsmuster. Eine Übertragungslinse fokussiert beispielsweise als optisches Übertragungselement 106 das definierte Strahlungsmuster.

Im Schritt 208 empfängt ein optisches Empfangselement 110 elektromagnetische Strahlung, die von dem Objekt 108 reflektiert wurde. Beispielsweise empfängt eine Empfängerlinse als optisches Empfangselement 110 elektromagnetische Strahlung, die vom Objekt 108 reflektiert wurde und fokussiert die empfangene elektromagnetische Strahlung auf einen Detektor 112.

Im Schritt S208 detektiert der Detektor 112 den Empfang reflektierter, empfangener elektromagnetischer Strahlung. Die elektromagnetische Strahlung kann vom Objekt reflektiert worden sein. Der Detektor 112 kann beispielsweise ein ladungsgekoppeltes Bauelement (CCD), ein Cadmiumsulfidsensor, ein CMOS-Sensor oder ein anderer Sensor sein, der ein elektrisches Signal abgibt, wenn elektromagnetische Energie, wie Licht, auf den Detektor 112 fällt.

Im Schritt 210 stellt ein Datenprozessor 116 eine vergangene Zeit fest, die zwischen einer Absendezeit der elektromagnetischen Strahlung auf das Objekt 108 und einer Empfangszeit des Empfangs der elektromagnetischen Strahlung vom Objekt 108 verstrichen ist.

Im Schritt 212 setzt der Datenprozessor 116 oder ein Konverter 114 die vergangene Zeit in eine Entfernung zwischen dem Objekt 108 und dem Referenzpunkt um. Die Entfernung zwischen dem Objekt 108 und dem Referenzpunkt kann als Eingabe eines Führungssystems eines Arbeitsfahrzeugs verwendet werden, wie einer landwirtschaftlichen Maschine, einem Mähdrescher, Ernter, Traktor oder anderer Fahrzeuge.

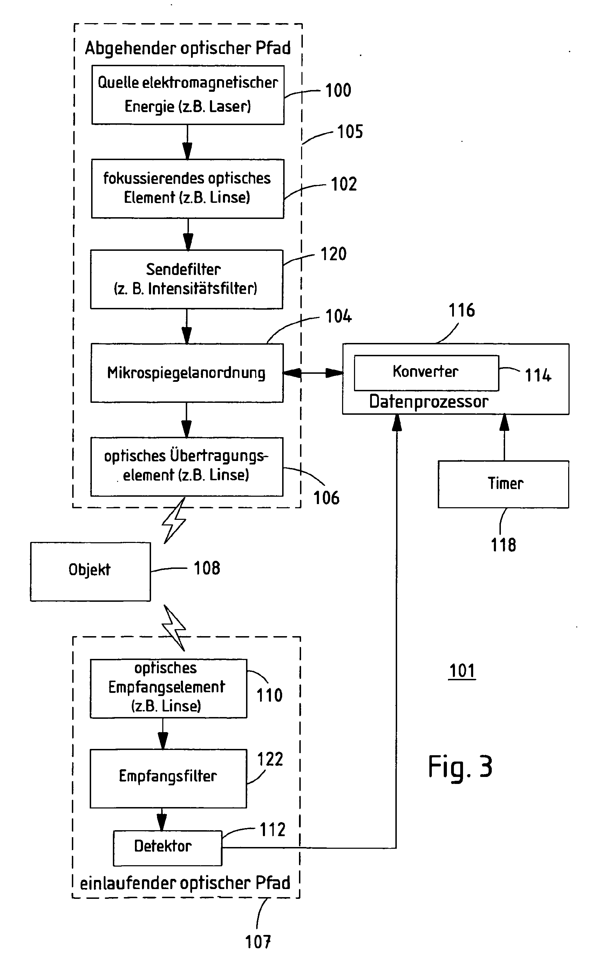

Die Figur 3 zeigt eine andere Ausführungsform eines Entfernungsmessers. Der Entfernungsmesser 101 nach Figur 3 ist dem Entfernungsmesser aus Figur 1 ähnlich, jedoch weist der Entfernungsmesser 101 aus Figur 3 ein Sendefilter 120 und ein Empfangsfilter 122 auf. Gleichartige Bezugszeichen in den Figuren 1 und 3 weisen auf gleichartige Elemente hin.

Der optische Entfernungsmesser 101 aus Figur 3 umfasst einen abgehenden optischen Pfad 105 und einen einlaufenden optischen Pfad 107. Der abgehende optische Pfad 105 steht mit einem elektromagnetischen Signal (z. B. einem Impuls oder einem Impulszug) in Beziehung, der vom Entfernungsmesser 101 auf ein Objekt 108 abgesandt wird, während der einlaufende optische Pfad 107 mit dem reflektierten elektromagnetischen Signal, das vom Entfernungsmesser 101 empfangen wird, in Beziehung steht. Der abgehende optische Pfad 105 umfasst eine Quelle 100 für elektromagnetische Energie, ein fokussierendes optisches Element 102, ein Sendefilter 120, eine Mikrospiegelanordnung 104 und ein optisches Übertragungselement 106. Der einlaufende optische Pfad 107 umfasst ein optisches Empfangselement 110, ein Empfangsfilter 122 und einen Detektor 112.

Bei einer Ausführungsform umfasst das Sendefilter 120 ein Intensitätsfilter. Das Intensitätsfilter kann durch eine Flüssigkristallanzeige oder eine Scheibe mit unterschiedlichen Durchlässigkeitsniveaus realisiert werden. Das Sendefilter 120 kann die ausgehende elektromagnetische Strahlung abschwächen, um für die Augen sichere Ausgangspegel der vom abgehenden optischen Pfad 105 abgesandten elektromagnetischen Strahlung zu erhalten. Das Intensitätsfilter kann auch die von der Quelle 100 elektromagnetischer Energie abgegebene Strahlung abschwächen, um die maximale Distanz zu begrenzen, aus der ein rücklaufendes Signal nachgewiesen werden kann. Dadurch würden selbsttätig Objekte 108 außerhalb eines bestimmten interessierenden Bereichs ausgefiltert. Es würde auch erlauben, die Abtastrate zu vergrößern, da die Zeit für jeden aufgenommenen Datenpunkt auf die maximale mittlere Gesamtlaufzeit zum weitest entfernten Objekt 108 begrenzt ist, das einen Rücklauf erzeugen kann. Das Sendefilter 120 kann auch zwischen der Mikrospiegelanordnung 104 und dem optischen Übertragungselement 106 angeordnet werden; in der dargestellten Position ist die Mikrospiegelanordnung 104 jedoch vor der zusätzlichen Hitze von der vollen elektromagnetischen Strahlung geschützt, die von der Quelle 100 erzeugt wird.

## Patentansprüche

1. Optischer Entfernungsmesser (99, 101) zur Messung der Entfernung zwischen dem Entfernungsmesser (99, 101) und einem Objekt (108), mit:
einer Quelle (100) zum Erzeugen eines Strahls elektromagnetischer Energie,
einem fokussierenden optischen Element (102) zur Fokussierung oder Kollimation des Strahls,
einer Spiegelanordnung zum Empfangen des Strahls vom fokussierenden optischen Element (102) und zur Abgabe eines steuerbaren Strahls in einem steuerbaren Strahlungsmuster,
einem Datenprozessor (116) zur Ansteuerung der Spiegelanordnung zur Abgabe des gesteuerten Strahls basierend auf einer Eingabe,
einem optischen Übertragungselement (106) zur Fokussierung des gesteuerten Strahls auf ein Objekt (108),
einem optisches Empfangselement (110) zur Aufnahme einer Reflexion des steuerbaren Strahlungsmusters vom Objekt (108),
einem Detektor (112) zum Empfang der Reflexion und Bereitstellung eines Ausgangssignals an den Datenprozessor (116),
und einem mit dem Datenprozessor (116) verbundenen Timer zur Bestimmung einer zwischen dem Absenden eines identifizierbaren Impulses elektromagnetischer Strahlung von der Quelle (100) und dem Empfang der Reflexion des identifizierbaren Impulses am Detektor (112) verstrichenen Zeit, die auf die Entfernung zwischen dem Entfernungsmesser (99, 101) und dem Objekt (108) hinweist, zur Abschätzung der Entfernung zwischen dem Objekt (108) und dem Entfernungsmesser (99, 101),
**dadurch gekennzeichnet, dass** die Spiegelanordnung eine Mikrospiegelanordnung (104) ist, die eine Reihe deformierbarer reflektierender Oberflächen und eine Strahlsteuerung umfasst, um die Mikrospiegelanordnung so anzusteuern, dass sie die Richtung und des Muster des steuerbaren Strahls vorgibt, wobei der steuerbare Strahl in ein erstes Muster zur Abtastung eines Gesichtsfelds und in ein weiteres Muster zur Abdeckung einer Probe oder einer Unterfläche des Gesichtsfelds gesteuert wird.

2. Optischer Entfernungsmesser (99, 101) nach Anspruch 1, **dadurch gekennzeichnet, dass** die Mikrospiegelanordnung (104) ein mikroelektromechanisches System ist.

3. Optischer Entfernungsmesser (99, 101) nach einem der Ansprüche 1 oder 2, **dadurch gekennzeichnet, dass** die Strahlgröße durch Reflexionsbeiträge von mehreren Elementen der Mikrospiegelanordnung (104) festgelegt wird.

4. Optischer Entfernungsmesser (99, 101) nach einem der Ansprüche 1 bis 3, **dadurch gekennzeichnet, dass** der Strahl einen mittigen Strahlbereich umfasst, der stufenweise in eine gewünschte Winkelorientierung gesteuert wird, ohne von der gewünschten Winkelorientierung um mehr als eine maximale Toleranz abzuweichen.

5. Optischer Entfernungsmesser (99, 101) nach einem der Ansprüche 1 bis 4, **dadurch gekennzeichnet, dass** die Quelle (100) ein Laser ist.

6. Optischer Entfernungsmesser (99, 101) nach einem der Ansprüche 1 bis 5, **dadurch gekennzeichnet, dass** Elemente der Mikrospiegelanordnung (104) schon vor dem Zeitpunkt aktivierbar sind, an dem eine Positionsänderung der Elemente wirklich erforderlich ist, um die Antwortzeit der Mikrospiegelanordnung (104) zu vermindern.

7. Optischer Entfernungsmesser (101) nach einem der Ansprüche 1 bis 6, **dadurch gekennzeichnet, dass** ein zum Herausfiltern oder Zurückweisen wenigstens einer Frequenz aus der reflektierten elektromagnetischen Strahlung eingerichtetes Filter (122) im Weg des vom Objekt (108) reflektierten steuerbaren Strahls angeordnet ist.

8. Verfahren zur Bestimmung der Entfernung zwischen einem Objekt (108) und einem Referenzpunkt, mit folgenden Schritten:
Abstrahlen elektromagnetischer Strahlung,
Fokussieren der elektromagnetischen Strahlung auf eine Spiegelanordnung,
Richten der fokussierten elektromagnetischen Strahlung in einer definierten Richtung oder einem definierten Strahlungsmuster auf ein Objekt (108),
Fokussieren der elektromagnetischen Strahlung,
Empfangen vom Objekt (108) reflektierter elektromagnetischer Strahlung,
Detektion des Empfangs reflektierter elektromagnetischer Strahlung,
Feststellung einer zwischen der Absendung der elektromagnetischen Strahlung auf das Objekt (108) und dem Empfang der elektromagnetischen Strahlung vom Objekt (108) verstrichenen Zeit, und
Umrechnen der verstrichenen Zeit in eine Entfernung zwischen dem Objekt und dem Referenzpunkt,
**dadurch gekennzeichnet, dass** die Spiegelanordnung eine Mikrospiegelanordnung (104) ist, die eine Reihe deformierbarer reflektierender Oberflächen und eine Strahlsteuerung umfasst, welche die Mikrospiegelanordnung so ansteuert, dass die Mikrospiegelanordnung die Richtung und das Muster des steuerbaren Strahls vorgibt, wobei der steuerbare Strahl in ein erstes Muster zur Abtastung eines Gesichtsfelds und in ein weiteres Muster zur Abdeckung einer Probe oder einer Unterfläche des Gesichtsfelds gesteuert wird.

9. Verfahren nach Anspruch 8, **dadurch gekennzeichnet, dass** die abgestrahlte elektromagnetische Strahlung gefiltert wird, um die Intensität der auf die Mikrospiegelanordnung (104) einfallenden elektromagnetischen Strahlung zu steuern.

10. Verfahren nach Anspruch 8 oder 9, **dadurch gekennzeichnet, dass** die reflektierte elektromagnetische Strahlung gefiltert wird, um die Intensität der auf einen Detektor (112) einfallenden elektromagnetischen Strahlung zu steuern.

## Claims

1. Optical rangefinder (99, 101) for measuring the distance between the rangefinder (99, 101) and an object (108), comprising:
a source (100) for generating an electromagnetic-energy beam,
a focusing optical element (102) for focusing or collimating the beam,
a mirror arrangement for receiving the beam from the focusing optical element (102) and for emitting a controllable beam in a controllable radiation pattern,
a data processor (116) for actuating the mirror arrangement for emitting the controlled beam on the basis of an input,
an optical transmission element (106) for focusing the controlled beam onto an object (108),
an optical reception element (110) for recording a reflection of the controllable radiation pattern from the object (108),
a detector (112) for receiving the reflection and providing an output signal for the data processor (116),
and a timer, connected to the data processor (116), for determining a time elapsed between the emission of an identifiable pulse of electromagnetic radiation from the source (100) and the reception of the reflection of the identifiable pulse at the detector (112), which time indicates the distance between the rangefinder (99, 101) and the object (108) for estimating the distance between the object (108) and the rangefinder (99, 101),
**characterized in that** the mirror arrangement is a micromirror arrangement (104) that comprises a number of deformable reflecting surfaces and a beam control, for actuating the micromirror arrangement such that it prescribes the direction and the pattern of the controllable beam, the controllable beam being controlled into a first pattern for scanning a field of view and into a further pattern for covering a sample or an underside of the field of view.

2. Optical rangefinder (99, 101) according to Claim 1, **characterized in that** the micromirror arrangement (104) is a microelectromechanical system.

3. Optical rangefinder (99, 101) according to one of Claims 1 or 2, **characterized in that** the beam dimension is determined by reflection contributions of a plurality of elements of the micromirror arrangement (104).

4. Optical rangefinder (99, 101) according to one of Claims 1 to 3, **characterized in that** the beam comprises a central beam region, which is controlled into a desired angular orientation in a step-like fashion without deviating from the desired angular orientation by more than a maximum tolerance.

5. Optical rangefinder (99, 101) according to one of Claims 1 to 4, **characterized in that** the source (100) is a laser.

6. Optical rangefinder (99, 101) according to one of Claims 1 to 5, **characterized in that** elements of the micromirror arrangement (104) can already be activated before the time at which a positional change of the elements is in fact necessary in order to reduce the response time of the micromirror arrangement (104).

7. Optical rangefinder (101) according to one of Claims 1 to 6, **characterized in that** a filter (122) designed to filter out or reject at least one frequency from the reflected electromagnetic radiation is arranged in the path of the controllable beam reflected by the object (108).

8. Method for determining the distance between an object (108) and a reference point, comprising the following steps:
emitting electromagnetic radiation,
focusing the electromagnetic radiation onto a mirror arrangement,
directing the focused electromagnetic radiation in a defined direction or a defined radiation pattern onto an object (108),
focusing the electromagnetic radiation,
receiving electromagnetic radiation reflected by the object (108),
detecting the reception of reflected electromagnetic radiation,
determining a time elapsed between the emission of the electromagnetic radiation to the object (108) and the reception of the electromagnetic radiation from the object (108), and
converting the elapsed time into a distance between the object and the reference point,
**characterized in that** the mirror arrangement is a micromirror arrangement (104) that comprises a number of deformable reflecting surfaces and a beam control, which actuates the micromirror arrangement such that the micromirror arrangement prescribes the direction and the pattern of the controllable beam, the controllable beam being controlled into a first pattern for scanning a field of view and into a further pattern for covering a sample or an underside of the field of view.

9. Method according to Claim 8, **characterized in that** the emitted electromagnetic radiation is filtered in order to control the intensity of the electromagnetic radiation impinging on the micromirror arrangement (104).

10. Method according to Claim 8 or 9, **characterized in that** the reflected electromagnetic radiation is filtered in order to control the intensity of the electromagnetic radiation impinging on a detector (112).

## Revendications

1. Télémètre optique (99, 101) destiné à mesurer la distance entre le télémètre (99, 101) et un objet (108), comprenant :
une source (100) destinée à générer un faisceau d'énergie électromagnétique,
un élément optique de focalisation (102) destiné à focaliser ou à collimater le faisceau,
un ensemble à miroirs destiné à recevoir le faisceau en provenance de l'élément optique de focalisation (102) et à délivrer un faisceau orientable selon un diagramme de rayonnement,
un processeur de données (116) destiné à commander l'ensemble à miroirs pour délivrer le faisceau orienté sur la base d'une entrée,
un élément de transmission optique (106) destiné à focaliser le faisceau orienté sur un objet (108),
un élément de réception optique (110) destiné à acquérir une réflexion du diagramme de rayonnement orientable en provenance de l'objet (108),
un détecteur (112) destiné à recevoir la réflexion et la fourniture d'un signal de sortie du processeur de données (116),
et un temporisateur relié au processeur de données (116) pour déterminer un temps s'étant écoulé entre l'émission d'une impulsion identifiable de rayonnement électromagnétique par la source (100) et la réception de la réflexion de l'impulsion identifiable par le détecteur (112), lequel temps est représentatif de la distance entre le télémètre (99, 101) et l'objet (108), pour estimer la distance entre l'objet (108) et le télémètre (99, 101),
**caractérisé en ce que** l'ensemble à miroirs est un ensemble de micromiroirs (104) qui comprend une série de surfaces réfléchissantes déformables et un dispositif de commande de faisceau pour commander l'ensemble de micromiroirs afin d'imposer la direction et le diagramme du faisceau orientable, le faisceau orientable étant commandé selon un premier diagramme afin de balayer un champ de vue et selon un diagramme supplémentaire afin de couvrir un échantillon ou une surface sous-jacente du champ de vue.

2. Télémètre optique (99, 101) selon la revendication 1, **caractérisé en ce que** l'ensemble de micromiroirs (104) est un système micro-électromécanique.

3. Télémètre optique (99, 101) selon l'une des revendications 1 ou 2, **caractérisé en ce que** la taille du faisceau étant déterminée à partir des contributions à la réflexion de plusieurs éléments de l'ensemble de micromiroirs (104).

4. Télémètre optique (99, 101) selon l'une quelconque des revendications 1 à 3, **caractérisé en ce que** le faisceau comprend une région de faisceau centrale qui est orientée pas à pas selon une orientation angulaire souhaitée sans s'écarter de l'orientation angulaire souhaitée de plus d'une tolérance maximale.

5. Télémètre optique (99, 101) selon l'une quelconque des revendications 1 à 4, **caractérisé en ce que** la source (100) est un laser.

6. Télémètre optique (99, 101) selon l'une quelconque des revendications 1 à 5, **caractérisé en ce que** des éléments de l'ensemble de micromiroirs (104) sont activables avant l'instant où une modification de position des éléments devient effectivement nécessaire afin de diminuer le temps de réponse de l'ensemble de micromiroirs (104).

7. Télémètre optique (101) selon l'une quelconque des revendications 1 à 6, **caractérisé en ce qu'**un filtre (122) conçu pour éliminer par filtrage ou rejeter au moins une fréquence du rayonnement électromagnétique réfléchi est disposé sur le trajet du faisceau orientable réfléchi par l'objet (108).

8. Procédé de détermination de la distance entre un objet (108) et un point de référence, comprenant les étapes suivantes :
émettre un rayonnement électromagnétique,
focaliser le rayonnement électromagnétique sur un ensemble à miroirs,
diriger le rayonnement électromagnétique focalisé dans une direction définie ou selon un diagramme de rayonnement défini, vers un objet (108),
focaliser le rayonnement électromagnétique,
recevoir en provenance de l'objet (108) un rayonnement électromagnétique réfléchi,
détecter la réception du rayonnement électromagnétique réfléchi,
déterminer un temps s'étant écoulé entre l'émission du rayonnement électromagnétique vers l'objet (108) et la réception du rayonnement électromagnétique en provenance de l'objet (108), et
convertir le temps s'étant écoulé en une distance entre l'objet et le point de référence,
**caractérisé en ce que** l'ensemble à miroirs est un ensemble de micromiroirs (104) qui comprend une série de surfaces réfléchissantes déformables et un dispositif de commande de faisceau qui commande l'ensemble de micromiroirs afin d'imposer la direction et le diagramme du faisceau orientable, le faisceau orientable étant commandé selon un premier diagramme afin de balayer un champ de vue et selon un diagramme supplémentaire afin de couvrir un échantillon ou une surface sous-jacente du champ de vue.

9. Procédé selon la revendication 8, **caractérisé en ce que** le rayonnement électromagnétique émis est filtré afin de commander l'intensité du rayonnement électromagnétique incident sur l'ensemble de micromiroirs (104).

10. Procédé selon la revendication 8 ou 9, **caractérisé en ce que** le rayonnement électromagnétique réfléchi est filtré afin de commander l'intensité du rayonnement électromagnétique incident sur un détecteur (112).
